Europäisches Patentamt

European Patent Office

Office européen des brevets

(11) Publication number: **0 552 519 B1**

## EUROPEAN PATENT SPECIFICATION

(45) Date of publication of patent specification: **11.10.95**  (51) Int. Cl.⁶: **A23F  3/36**

(21) Application number: **92300477.4**

(22) Date of filing: **20.01.92**

(54) Improvements related to tea processing.

(43) Date of publication of application:
**28.07.93 Bulletin  93/30**

(45) Publication of the grant of the patent:
**11.10.95 Bulletin  95/41**

(84) Designated Contracting States:
**AT CH DE FR GB IT LI NL**

(56) References cited:
**EP-A- 0 050 482**
**GB-A- 1 417 649**
**US-A- 4 562 083**

(73) Proprietor: **TEA PROJECTS OVERSEAS LTD.**
**c/o Reads and Co.,**
**Wellington House,**
**17, Union Street,**
**St. Helier**
**Jersey,**
**Channel Islands (GB)**

(72) Inventor: **Millin,David John**
**Furzemoor Cottage,Coldharbour**
**Goring Heath**
**Reading,Berkshire,RG8 7SY (GB)**
Inventor: **Nicholson,Daniel William Ernest**
**The Small House,**
**Lower Shiplake,**
**Henley,**
**Oxon .RG9 3LW (GB)**

(74) Representative: **Votier, Sidney David**
**CARPMAELS & RANSFORD**
**43, Bloomsbury Square**
**London WC1A 2RA (GB)**

**Description**

This invention relates to tea processing, and is especially concerned with a process for preparing a decaffeinated tea product.

It is well known that tea may be decaffeinated by extraction with a solvent which has a selective preference for caffeine by comparison with other soluble components of the tea leaf. Such a decaffeination process is described for example in United Kingdom Patent Specification No. 1,417,649, according to which green leaf is subjected to solvent extraction by contacting it one or more times, before or after a fermentation step, with an organic solvent such as methylene chloride or an aliphatic ester such as ethyl acetate.

Another process for the production of decaffeinated tea is disclosed in EP-A-50482, which describes treating black tea with water to increase its moisture content and thereby break down caffeine complexes, extracting the treated tea with a low boiling halogenated hydrocarbon solvent for caffeine which is substantially saturated with flavour components of tea but which is not saturated with respect to caffeine, and separating the extracted tea from the solvent. The decaffeination of coffee is disclosed in US-A-4562083, the solvent used being n-butyl acetate.

It will be apparent that the quality of the decaffeinated product depends significantly on the degree of selectivity exercised by the solvent employed in the process. This influences the extent to which components other than caffeine, which may impart desirable taste and flavour characteristics, will be removed during the process.

The solvent methylene chloride is quite selective for caffeine and, for this reason, is generally regarded as yielding a better product than other less selective solvents. Such solvents, for example ethyl acetate, while still effective in removing caffeine, also remove other components, in particular polyphenols and flavouring substances, which would otherwise exert a very beneficial influence on the quality of the product. It would be of considerable benefit if the efficacy of such solvents could be improved.

It has now been found that if a saturated extracted solution of tea polyphenols and other desirable components other than caffeine in ethyl acetate is used to extract tea leaf, the caffeine can be removed satisfactorily and the resulting product is far superior to one prepared by extraction with pure ethyl acetate. Further, it has also been found that caffeine can be largely removed in a reasonably selective fashion from the resulting ethyl acetate solution by liquid/liquid extraction with water, thus permitting the ethyl acetate, still substantially saturated with desirable tea components, to be re-used for decaffeination without the need for distillation of the solvent.

According to the invention there is provided a process for preparing a decaffeinated tea product which comprises subjecting green, partly processed or black leaf to solvent extraction by contacting the said leaf one or more times with an organic solvent medium, wherein the organic solvent medium comprises ethyl acetate and is rich in non-caffeine tea products by (i) being previously subjected to contact with decaffeinated tea or (ii) being previously subjected to contact with non-decaffeinated tea followed by selective removal of caffeine, and wherein, after the or each extraction of the leaf with the organic solvent medium, the organic solvent medium is regenerated for further use by liquid/liquid extraction of the liquid phase resulting from the extraction with water at a pH of 2.

In a preferred embodiment of the invention, decaffeinated tea is moistened with water and extracted by stirring under ambient conditions with a volume equivalent to 10 times its weight of fresh ethyl acetate. The ethyl acetate is separated from the leaf by decantation, centrifugation or other suitable means, and used to extract three to five successive further batches of decaffeinated tea. The ethyl acetate solution so obtained will then have high concentrations of all ethyl acetate-soluble tea components other than caffeine. This solution is then used to extract one tenth of its weight of normal (i.e. non-decaffeinated) tea six times in succession. Between each extraction step the solvent is subjected to liquid/liquid extraction using water at pH2 to remove a substantial proportion of the caffeine.

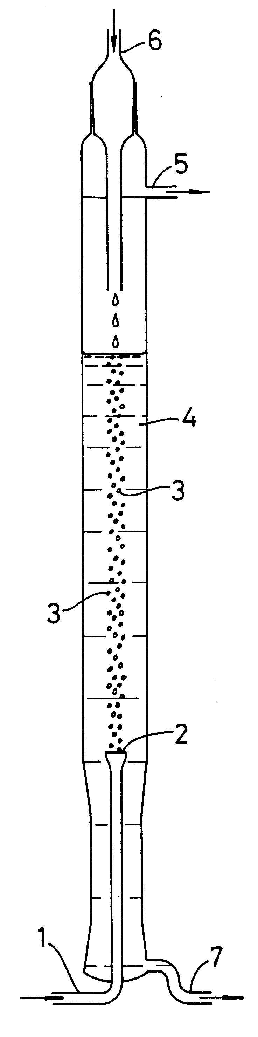

After the sixth extraction the tea is dried at 95-100°C when it is typically found to contain only 5% of its original caffeine. A suitable device for the liquid/liquid extraction procedure is shown in the accompanying drawing, which is a schematic representation of a liquid/liquid extraction column, the operation of which will be described below.

The ethyl acetate solution may be continually re-used in the manner described and that proportion of the solvent which dissolves in the water may also be recovered from the aqueous phase by heating and collecting the small proportion of the liquid which distils between 70 and 100°C. The remainder of the aqueous phase may be used as a source of caffeine or simply disposed of as waste. The distillate is allowed to separate into two phases and the ethyl acetate fraction returned to fresh solvent stocks. The aqueous phase of the distillate may be returned to the aqueous extraction medium and serve to reduce the amount of ethyl acetate which would otherwise pass into the water phase.

The preparation of the organic solvent medium containing a high concentration of tea solids other than caffeine may also be achieved by successive extraction of several batches of normal tea with organic solvent, e.g. ethyl acetate, and subsequent liquid/liquid extraction to remove most of the caffeine.

While the process of the invention can be employed with advantage to the decaffeination of black tea it may also be applied to the decaffeination of partly processed (i.e. green) tea after the manner described in UK Patent Specification No. 1,417,649 thus further enhancing the quality of the final product obtained by that process.

The invention is illustrated by the following Examples.

**EXAMPLE 1**

133g of Commercial black tea (non-decaffeinated) with a moisture content adjusted to 68% by the addition of water was shaken with 800ml of ethyl acetate previously saturated with water. The ethyl acetate was removed by decantation and shaken with a further 133g of moist black tea. This extraction and separation operation was repeated four times in total. The ethyl acetate so treated was then washed with twice its own volume of water at pH2 in a separating funnel to remove most of the caffeine and yielded 600ml of prepared solvent (A).

57g of good Kenya tea moistened as indicated above and containing 3.3% by weight caffeine was extracted with 570ml of the prepared solvent (A) by stirring for 10 minutes in a beaker. The ethyl acetate was removed by filtration and washed with twice its own volume of water at pH2 in a separating funnel. The volume of the ethyl acetate was then made up to 540ml by the addition of fresh, water-saturated, ethyl acetate and this was then used to extract the tea for the second time in a similar manner. Four further extractions of the tea were made using the same procedure, the ethyl acetate being 'regenerated' by washing with water at pH2 after each extraction. Samples of tea and solvent were removed for analysis and the results are shown in Table 1.

## TABLE 1

| | % total solids in solvent (by weight) | % caffeine in tea leaf (by weight) |
|---|---|---|
| Prepared Solvent (A) | 0.79 | 3.3 (original tea) |
| After 1st extraction | 0.85 | 2.2 |
| " 2nd " | 0.89 | 1.7 |
| " 3rd " | 0.83 | 0.9 |
| " 4th " | 0.76 | 0.6 |
| " 5th " | 0.80 | 0.4 |
| " 6th " | 0.84 | 0.2 |

The final extracted tea was dried at 95° for 30 minutes. When assessed organoleptically it compared very favourably both in taste and appearance with the same tea which had been extracted 5 times with fresh ethyl acetate each time.

EXAMPLE 2

5 Litre batches of ethyl acetate were pre-treated by being used to extract four successive 850g batches of moist partially processed tea, which had previously been decaffeinated using methylene chloride as described in UK Patent Specification No. 1,417,649. A total of 30 litres of ethyl acetate were treated, yielding 25 litres of prepared solvent (B).

500g of partially processed fermented tea with a moisture content of approximately 70% was extracted six times with 4 litre batches of solvent (B) plus 1 litre of fresh solvent, essentially as described in Example 1. The tea was dried on a tray with a wire mesh bottom which was passed manually through a commercially available tea drier. Yield: 140g dry tea with a caffeine content of 0.12% by weight; Sample (C).

Each batch of solvent was separately regenerated by dispersing through a glass sinter into twice its volume of distilled water adjusted to pH2 and stirring gently for 5 minutes in a vessel with a bottom outlet. The aqueous phase was run off and the solvent used to extract a further 250g of partially processed fermented tea. 2.5 Litres of regenerated solvent from each of the six batches were used in the sequence in which they were prepared.

The resultant tea (Sample (D)) had a caffeine content of 0.06% by weight.

Samples (C) and (D) were both rated superior in both taste and appearance to any available decaffeinated teas known to be prepared from black tea (including the samples from Example 1).

EXAMPLE 3

15g of good black tea with a caffeine content of 3.2% by weight, moistened to 70% moisture, was extracted 6 times with fresh ethyl acetate pre-saturated with water at pH2. The tea was then dried at 90°C after which it had a caffeine content of 0.1% by weight (Sample E).

Each of the above ethyl acetate extracts was 'regenerated' by passage through the liquid/liquid extraction device shown in the drawing. The ethyl acetate extract was pumped into the base of the apparatus at 1 and passed up through a sintered disc 2. It rose up in the form of discrete droplets 3 through a column 4 of water at pH2, finally collecting in a separate layer and leaving the apparatus through tube 5. Meanwhile water at pH2 was passed down through the apparatus at a rate similar to the inlet rate of the ethyl acetate, entering at 6 and leaving at 7. Each ethyl acetate extract so regenerated is separately referred to as solvent C1, C2, C3, C4, C5, C6 respectively.

A batch of solvent was also prepared by the procedure described in Example 2 except that decaffeinated black tea was used as the source of soluble tea components other than caffeine; solvent D.

30 g of the same black tea used to prepare Sample E was extracted 6 times with a mixture of solvents as follows:

| 1st extraction | 250ml C1 plus 750ml D |
|---|---|
| 2nd extraction | 250ml C2 plus 700ml from the 1st extraction after regeneration using the apparatus shown in the drawing |
| 3rd extraction | 250ml C3 plus 650ml from the 2nd extraction after similar regeneration |
| 4th extraction | 250ml C4 plus 600ml from the 3rd extraction after similar regeneration |
| 5th extraction | 250ml C5 plus 550ml from the 4th extraction after similar regeneration |
| 6th extraction | 250ml C6 plus 500ml from the 5th extraction after similar regeneration |

The finally obtained tea, Sample F, was dried at 90-95°C and had a caffeine content of 0.3% by weight.

When assessed organoleptically Sample F was found to be superior in quality to Sample E.

**Claims**

1. A process for preparing a decaffeinated tea product which comprises subjecting green, partly processed or black leaf to solvent extraction by contacting the said leaf one or more times with an organic solvent medium comprising ethyl acetate, characterised in that the organic solvent medium is rich in non-caffeine tea products by (i) being previously subjected to contact with decaffeinated tea or (ii) being previously subjected to contact with non-decaffeinated tea followed by selective removal of caffeine, and in that after the or each extraction of the leaf with the organic solvent medium, the organic solvent medium is regenerated for further use by liquid/liquid extraction of the liquid phase resulting from the extraction with water at a pH of 2.

2. A process as claimed in Claim 1 wherein the organic solvent medium is a mixture of a first solvent medium which has been previously subjected to contact with decaffeinated tea and a second solvent medium which has been previously subjected to contact with non-decaffeinated tea followed by selective removal of caffeine.

3. A process as claimed in Claim 1 or 2 wherein the organic solvent medium is prepared by contacting moistened decaffeinated tea with up to 10 times its weight of an organic solvent comprising ethyl acetate, separating off the organic solvent medium so produced and, if desired, contacting one or more further batches of moistened decaffeinated tea successively with the organic solvent medium produced by the or each preceding contact respectively.

**Patentansprüche**

1. Verfahren zur Herstellung eines entkoffeinierten Teeprodukts, bei dem grüne, teilweise behandelte oder schwarze Blätter einer Lösungsmittelextraktion unterzogen werden, indem diese Blätter einmal oder mehrmals in Kontakt mit einem organischen Lösungsmittelmedium gebracht werden, das Äthylazetat enthält,
dadurch gekennzeichnet, daß das organische Lösungsmittelmedium reich an entkoffeinierten Teeprodukten ist, und zwar dadurch (i), daß es vorab in Kontakt mit entkoffeiniertem Tee gebracht wird oder (ii) vorab in Kontakt mit nicht entkoffeiniertem Tee gebracht wird, dem anschließend das Koffein selektiv entzogen wird, und bei dem nach dem oder jedem Extrahieren des Blattes mit dem organischen Lösungsmittelmedium das organische Lösungsmittelmedium zum weiteren Gebrauch durch Flüssig-Flüssig-Extraktion der flüssigen Phase, die durch die Extraktion mit Wasser mit einem pH-Wert von 2 entstanden ist, regeneriert wird.

2. Verfahren nach Anspruch 1, bei dem das organische Lösungsmittelmedium ein Gemisch ist aus einem ersten Lösungsmittelmedium, das vorab in Kontakt mit entkoffeiniertem Tee gebracht wurde, und einem zweiten Lösungsmittelmedium, das vorab in Kontakt mit nicht entkoffeiniertem Tee gebracht wurde, dem anschließend selektiv das Koffein entzogen wird.

3. Verfahren nach Anspruch 1 oder 2, bei dem das organische Lösungsmittelmedium hergestellt wird, indem feuchter, entkoffeinierter Tee mit einem Äthylazetat enthaltenden organischen Lösungsmittel mit einem Gewicht vom bis zum Zehnfachen seines eigenen Gewichtes in Kontakt gebracht wird, wobei das so entstandene organische Lösungsmittelmedium abgeschieden wird, und, wenn erwünscht, indem eine oder mehrere weitere Partien feuchten, entkoffeinierten Tees nacheinander mit dem durch den bzw. jeden vorangegangenen Kontakt entstandenen organischen Lösungsmittelmedium gebracht werden.

**Revendications**

1. Procédé de fabrication d'un produit de thé décaféiné dans lequel des feuilles vertes, partiellement traitées ou noires sont soumises à une extraction par solvant, en mettant une ou plusieurs fois lesdites feuilles en contact avec un milieu de solvant organique comprenant de l'acétate d'éthyle, caractérisé en ce que le milieu de solvant organique est riche en produits de thé ne contenant pas de caféine, et ce dû au fait (i) qu'il est préalablement mis en contact avec du thé décaféiné ou (ii) préalablement mis en contact avec du thé non décaféiné, suivi par l'élimination sélective de la caféine, et dans lequel, suite à la ou à chaque extraction de la feuille par le milieu de solvant organique, le milieu de solvant organique est régénéré pour son utilisation ultérieure par extraction liquide-liquide de la phase liquide résultant de l'extraction par de l'eau à une valeur pH de 2.

2. Procéde selon la revendication 1, dans lequel le milieu de solvant organique est un mélange d'un premier milieu de solvant ayant préalablement été mis en contact avec du thé décaféiné et d'un second milieu de solvant ayant préalablement été mis en contact avec du thé non décaféiné, suivi par l'élimination sélective de la caféine.

3. Procédé suivant la revendication 1 ou 2, dans lequel le milieu de solvant organique est préparé en mettant en contact du thé décaféiné humidifié avec jusqu'à 10 fois son propre poids d'un solvant organique comprenant de l'acétate d'éthyle, en séparant le milieu de solvant organique ainsi produit et, si on le désire, en mettant en contact successivement une ou plusieurs charges de thé décaféiné humidifié avec le milieu de solvant organique produit respectivement par le ou chaque contact préalable.